# EUROPÄISCHE PATENTSCHRIFT

(11) **EP 1 461 552 B1**
(45) Veröffentlichungstag und Bekanntmachung des Hinweises auf die Patenterteilung: **02.11.2006**
(21) Anmeldenummer: 02796523.5
(22) Anmeldetag: 30.12.2002
(51) Int. Cl.: F16K 15/02, F16K 15/06, F04B 53/10

(54) **EINLASS- BZW. AUSLASSVENTIL FÜR EINE PUMPE**
INLET OR OUTLET VALVE FOR A PUMP
SOUPAPE D'ENTREE OU DE SORTIE CON UE POUR UNE POMPE

(30) Priorität: 07.01.2002 DE 10200275
(43) Veröffentlichungstag der Anmeldung: 29.09.2004
(73) Patentinhaber: SIEMENS AKTIENGESELLSCHAFT, 80333 München (DE)
(72) Erfinder: ARNOLD, Bernhard, 97849 Roden-Ansbach (DE); HOHMANN, Marc, 97828 Marktheidenfeld (DE)
(86) Internationale Anmeldenummer: PCT/DE2002/004752
(87) Internationale Veröffentlichungsnummer: WO 2003/058100

(56) Entgegenhaltungen:
- DE-A- 4 321 800
- DE-A- 19 741 249
- US-A- 3 474 808
- US-A- 4 187 059
- US-A- 4 766 929
- US-A- 5 636 975
- US-A- 5 921 276

## Beschreibung

Die vorliegende Erfindung betrifft ein Einlass- bzw. Auslassventil für eine Pumpe nach dem Oberbegriff des Patentanspruchs 1.

Einlass- bzw. Auslassventile für Pumpen sind in unterschiedlichen Ausgestaltungen bekannt. Beispielsweise zeigt die DE-197 44 577 A1 eine Radialkolbenpumpe zur Kraftstoffhochdruckversorgung, welche ein federbelastetes Einlassventil aufweist. Das Einlassventil ist in einer Platte angeordnet, in welcher eine Querbohrung vorgesehen ist, durch welche beim Ansaughub Kraftstoff durch das geöffnete Einlassventil strömen kann. Das Einlassventil ist dabei in einer Ausnehmung in einer Verschlussschraube angeordnet. Der Schließkörper ist im Wesentlichen T-förmig gebildet und ein zylindrischer Schließkörperabschnitt ist in einer Bundbuchse geführt, welche lose in der Ausnehmung in der Verschlussschraube angeordnet ist und gleichzeitig auch als Federsitz für eine Rückstellfeder des Einlassventils dient.

Aus der DE 43 21 800 C2 ist ein Rückschlagventil bekannt, mit einem axialen Einlass und radial angeordneten Auslassbohrungen. Das Ventil umfasst einen Schließkörper der in einem Führungselement axial beweglich geführt ist und in einem oberen Endbereich und einem zweiten Bereich, etwa in der Mitte des Schließkörpers, geführt wird. Der Schließkörper ist in dem Endbereich an dem sich der Ventilsitz befindet, derart ausgebildet, dass sich der Schließkörper in diesem Bereich in radialer Richtung elastisch verformen kann.

Bei den bekannten Einlassventilen (Rückschlagventilen) von Hochdruckpumpen mit axialer Durchströmungsrichtung ist eine exakte Führung des Schließkörpers problematisch, da der Schließkörper in einer frei beweglichen Bundbuchse gelagert ist. Dadurch kann es zu Schiefstellungen des Schließkörpers kommen, was sich insbesondere bei hohen Drehzahlen der Pumpe negativ auf den Sitzverschleiß und die Einlassventilfunktion auswirkt. Weiterhin ist häufig die Überströmung von Einlassventilen mit axialer Durchströmungsrichtung nur unzureichend gelöst und führt zu zusätzlichen Verlusten.

Ventile dieser art sind aus den Dokumenten DE 19741249, US 3474808, US 5636975 und US 4766929 bekannt.

Es ist von daher Aufgabe der vorliegenden Erfindung, ein Einlass- bzw. Auslassventil für eine Pumpe bereitzustellen, welches bei einfachem Aufbau und einfacher, kostengünstiger Herstellbarkeit insbesondere eine Schiefstellung des Schließkörpers wirksam verhindern kann.

Diese Aufgabe wird durch ein Einlassventil mit den Merkmalen des Patentanspruchs 1 gelöst. Die Unteransprüche zeigen vorteilhafte Weiterbildungen der Erfindung.

Das erfindungsgemäße axial durchströmte Einlass- bzw. Auslassventil für eine Pumpe umfasst einen mittels eines Federelements vorgespannten Schließkörper, welcher einen Durchlass an einem Ventilsitz freigeben bzw verschließen kann. Weiterhin umfasst das Ventil ein einstückiges Führungselement zur Führung des Schließkörpers. Erfindungsgemäß ist dabei der Schließkörper im Führungselement an wenigstens einem ersten Führungsbereich an seinem oberen Endbereich und einem zweiten Führungsbereich an seinem unteren Endbereich geführt. Durch die erfindungsgemäße Führung des Schließkörpers an einem oberen und einem unteren Ende des Schließkörpers, sind die beiden Führungsbereiche des Schließkörpers möglichst weit voneinander entfernt, so dass erstmals eine exakte und sichere Führung eines Schließkörpers bei einem axial durchströmten Ventil erreicht werden kann. Dadurch kann sicher verhindert werden, dass der Schließkörper während der Öffnungs- bzw. Schließbewegung in eine Schieflage kommt, wodurch eine unerwünschte Kantenbelastung beim Aufsetzen des Schließkörpers auf den Ventilsitz bzw. auf einer Anschlagfläche für den Schließkörper verhindert werden kann. Dadurch können insbesondere Beschädigungen an anderen Ventilbauteilen verhindert werden, so dass das erfindungsgemäße Ventil eine besonders hohe Lebensdauer aufweist. Besonders bevorzugt wird das erfindungsgemäße Ventil bei einer Kolbenpumpe und insbesondere bei einer Kraftstoffkolbenpumpe verwendet. Da insbesondere bei Speichereinspritzsystemen sehr hohe Drücke durch die Kraftstoffpumpe erzeugt werden müssen, kann die doppelte Führung des Schließkörpers ein Schiefstellen z.B. beim Schließen des Ventils sicher verhindern.

Um eine einfache und kostengünstige Herstellbarkeit des Führungselements zu ermöglichen, ist das Führungselement vorzugsweise aus Kunststoff hergestellt. Besonders bevorzugt wird das Führungselement dabei mittels Spritzgießen hergestellt. Somit kann zum einen eine spanlose Herstellbarkeit des Führungselements sichergestellt werden und weiterhin kann das aus Kunststoff hergestellte Führungselement kostengünstig bei hohen Fertigungstoleranzen hergestellt werden. Weiterhin lassen sich dadurch fertigungsinduzierte und montagebedingte Spannungen im Führungselement in großem Umfang herabsetzen.

Um eine einfache Vormontierbarkeit des erfindungsgemäßen Ventils zu ermöglichen, ist das Führungselement vorzugsweise mittels eines Presssitzes mit dem Ventilsitz verbunden. Dabei ist zur Vormontage selbstverständlich erst der Schließkörper mit dem Federelement im Führungselement anzuordnen und anschließend das Führungselement auf dem Ventilsitz zu befestigen.

Eine besonders einfache Befestigung des Führungselements am Ventilsitz ist dann möglich, wenn das Führungselement in einer im Ventilsitz gebildeten Nut befestigbar ist. Besonders bevorzugt wird das Führungselement dabei in der Nut des Ventilsitzes mittels Reibschluss befestigt.

Vorzugsweise ist das Führungselement als Buchse mit wenigstens zwei daran integral gebildeten Ärmchen ausgebildet. Dadurch wird ein besonders einfach aufgebautes Ventil bereitgestellt, welches insbesondere eine gute Überströmung in Axialrichtung ermöglicht. Dabei kann das erfindungsgemäße Ventil trotzdem sehr kompakt, insbesondere in Axialrichtung, ausgebildet sein.

Um eine möglichst geringe Anzahl von Teilen aufzuweisen, ist am Führungselement vorzugsweise auch eine Anschlagfläche ausgebildet, welche eine Hubbegrenzung für den Schließkörper darstellt.

Besonders bevorzugt ist die Anschlagsfläche des Führungselements gleichzeitig auch der Sitz des Federelements, wobei die Anschlagsfläche darüber hinaus auch noch für eine Zentrierung des Federelements sorgen kann.

Gemäß einer besonders bevorzugten Ausgestaltung der vorliegenden Erfindung ist der Führungskörper aus einem zylindrischen Bereich und drei Ärmchen gebildet, so dass drei Überströmkanäle in Axialrichtung am Führungselement ausgebildet werden, welche jeweils zwischen zwei benachbarten Armen liegen.

Besonders bevorzugt ist einer der beiden Führungsbereiche am Führungselement zylindrisch ausgebildet. Dadurch kann eine lange Führungsstrecke für diesen ersten Führungsbereich ermöglicht werden.

Gemäß einer anderen bevorzugten Ausgestaltung der vorliegenden Erfindung ist einer der beiden Führungsbereiche konvex ausgebildet. Die konvexe Form des Führungsbereichs verhindert dabei ein Verkanten eines Führungsschafts des Schließkörpers.

Weiter bevorzugt ist der Ventilsitz als Plansitz ausgebildet. Vorzugsweise ist dann der Schließkörper mit einem planen Dichtteller ausgebildet, so dass ein besonders sicheres Verschließen ermöglicht wird. Weiterhin vorzugsweise weist der Schließkörper einen zylindrischen Führungsschaft auf, so dass am Schließkörper eine lange erste Führungsstrecke gebildet ist.

Gemäß einer anderen bevorzugten Ausgestaltung der vorliegenden Erfindung ist der Dichtteller des Schließkörpers sich verjüngend, insbesondere konisch, ausgebildet.

Um weiterhin eine hydraulische Dämpfung beim Öffnen des Ventils bereitzustellen, ist vorzugsweise am Schließkörper ein zusätzlicher Absatz ausgebildet, so dass Hydraulikfluid in einem Raum zwischen dem Schließkörper und dem Führungselement angeordnet ist. Beim Öffnen des Ventils wird das Hydraulikfluid durch den zwischen dem zusätzlichen Absatz und dem Führungselement vorhandenen Schlitz hinausgedrückt, so dass eine hydraulische Dämpfung bereitgestellt wird.

Das erfindungsgemäße Ventil wird besonders bevorzugt als Einlassventil bei einer Kraftstoffkolbenpumpe verwendet. Versuche haben hierbei ergeben, dass das Ventil mit dem doppelt an seinen beiden Endbereichen, geführten Schließkörper eine deutlich längere Lebensdauer als bisher bekannte Einlassventile bei Kolbenpumpen aufweist. Durch das Vorsehen der integrierten hydraulischen Dämpfung kann die Lebensdauer des Ventils dabei noch weiter gesteigert werden. Es sei weiter angemerkt, dass das erfindungsgemäße Ventil insbesondere auch bei anderen Pumpen mit diskontinuierlicher Förderung, wie z.B. auch Membranpumpen ö.Ä., verwendet werden kann.

Nachfolgend wird die vorliegende Erfindung unter Bezugnahme auf die begleitenden Zeichnungen beschrieben. In der Zeichnung ist:
- Figur 1: eine perspektivische Explosionsdarstellung eines Einlassventils für eine Kolbenpumpe gemäß einem ersten Ausführungsbeispiel der vorliegenden Erfindung,
- Figur 2: eine perspektivische Darstellung eines Führungsgelements gemäß dem ersten Ausführungsbeispiel der vorliegenden Erfindung,
- Figur 3: eine Schnittansicht des montierten Ventils gemäß dem ersten Ausführungsbeispiel der vorliegenden Erfindung und
- Figur 4: eine Schnittansicht eines Ventils gemäß einem zweiten Ausführungsbeispiel der vorliegenden Erfindung.

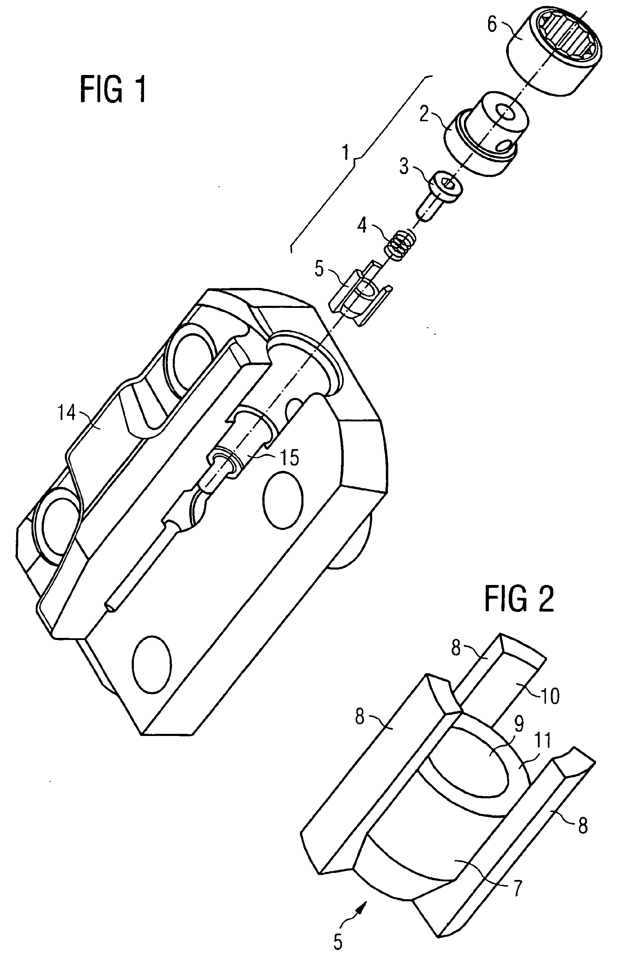

Nachfolgend wird unter Bezugnahme auf die Figuren 1 bis 3 ein Einlassventil gemäß einem ersten Ausführungsbeispiel der vorliegenden Erfindung beschrieben. Das in den Figuren 1 bis 3 dargestellte Einlassventil wird bei einer Radialkolbenpumpe verwendet, welche Kraftstoff für ein Speichereinspritzsystem fördert.

Wie insbesondere in Figur 1 gezeigt, umfasst das erfindungsgemäße Ventil 1 einen Ventilsitz 2, einen Schließkörper 3, ein Federelement 4 und ein Führungselement 5. Das erfindungsgemäße Ventil 1 ist dabei derart aufgebaut, dass die oben genannten Einzelteile vormontiert werden können und dann im vormontierten Zustand in einem Gehäuse 14 der Pumpe in einer Ausnehmung 15 angeordnet werden können. Das vormontierte Ventil 1 wird dabei mittels einer Verschlussschraube 6 im Gehäuse 14 fixiert.

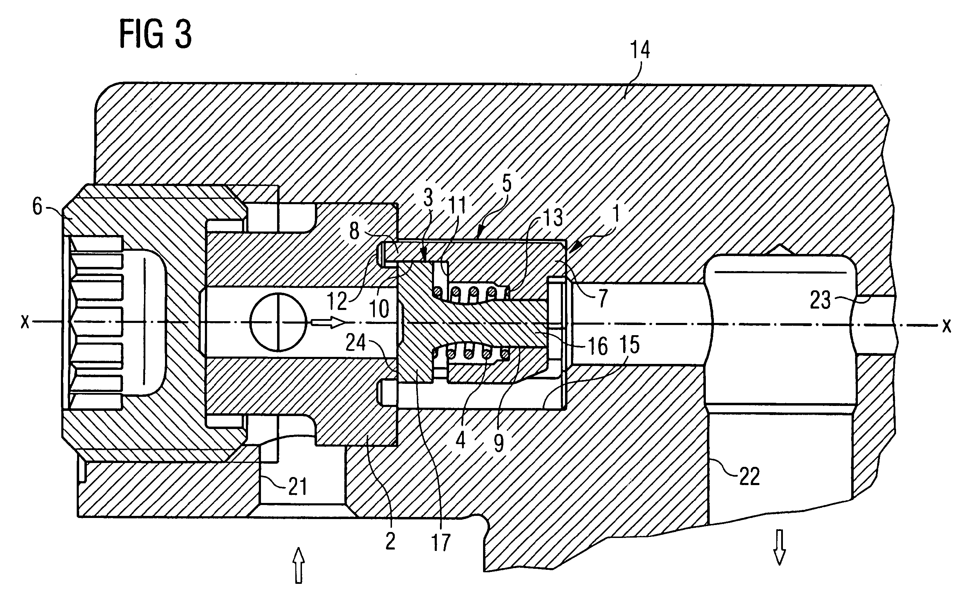

In Figur 2 ist das Führungselement 5 im Detail dargestellt. Wie in Figur 2 gezeigt, umfasst das Führungselement 5 einen zylindrischen Bereich 7 mit einer inneren Durchgangsbohrung sowie drei am äußeren Umfang des zylindrischen Bereichs 7 integral gebildete Ärmchen 8. Das Führungselement 5 ist dabei vorzugsweise aus Kunststoff mittels Spritzgießen hergestellt. Das Führungselement 5 weist einen ersten Führungsbereich 9 im Inneren des zylindrischen Bereichs 7 auf und einen zweiten Führungsbereich 10, welcher durch die Innenseiten der drei Ärmchen 8 gebildet wird.

In Figur 3 ist der montierte Zustand des Ventils 1 dargestellt. Wie aus Figur 3 ersichtlich, ist der Schließkörper 3 im Schnitt T-förmig gebildet, wobei er einen zylindrischen Bereich 16 und einen integral daran gebildeten Dichtteller 17 aufweist. Der zylindrische Bereich 16 wird dabei im montierten Zustand im ersten Führungsbereich 9 des Führungselements 5 geführt und der Dichtteller 17 wird am zweiten Führungsbereich 10 an den Innenseiten der Ärmchen 8 geführt. Im vorliegenden Ausführungsbeispiel sind am Führungselement 5 nur drei Ärmchen 8 ausgebildet. Es sei jedoch angemerkt, dass die Anzahl der Ärmchen 8 beliebig ist, wobei mindestens zwei Ärmchen für eine sichere Führung vorgesehen sein müssen. Da das Einlassventil 1 jedoch in Axialrichtung X-X überströmt wird, darf die Anzahl der Ärmchen nicht zu groß sein, so dass noch ausreichend Überströmbereiche am Ventil 1 vorhanden sind. Wie aus Figur 2 ersichtlich ist, ergeben sich bei drei Ärmchen 8 am Führungselement 5 drei Überströmungsbereiche, welche jeweils zwischen zwei benachbarten Ärmchen 8 liegen.

Weiterhin ist am Führungselement 5 ein Federsitz 13 gebildet, an welchem das Federelement 4, welches eine Spiralfeder ist, abgestützt wird. Mit ihrem anderen Ende stützt sich das Federelement 4 an der Unterseite des Dichttellers 17 ab (vgl. Figur 3).

Um eine einfache Vormontierbarkeit des erfindungsgemäßen Ventils zu ermöglichen, ist zwischen dem Führungselement 5 und dem Ventilsitz 2 ein Presssitz vorgesehen. Hierzu ist im Ventilsitz 2 eine Ringnut 12 ausgebildet, in welcher die Enden der drei Ärmchen 8 mittels einer Presspassung eingepasst sind. Dadurch kann eine einfache Vormontierbarkeit des Ventils 1 erreicht werden.

Nachfolgend wird die Funktion des erfindungsgemäßen Ventils 1 beschrieben. Das Ventil 1 ist zwischen einer Ansaugleitung 21 und einer Leitung 22, welche zur Hochdruckpumpe führt, angeordnet. Die Leitung 22 geht dabei als Stichleitung von einer Leitung 23 ab, welche zum Hochdruckbereich des Speichereinspritzsystems führt. Beim Ansaughub der Pumpe wird Kraftstoff durch die Ansaugleitung 21 angesaugt, wobei durch den erzeugten Unterdruck der Schließkörper 3 nach rechts bewegt wird. Dadurch hebt der Dichtteller 17 von einem Plansitz 24 am Ventilsitz 2 ab. Dadurch kann Kraftstoff durch die Überströmbereiche zwischen den Ärmchen 8 und die Leitung 22 zur Hochdruckpumpe strömen. Es sei angemerkt, dass hierbei in der Leitung 23 zum Hochdruckbereich ebenfalls ein Rückschlagventil angeordnet ist, um einen Rückfluss von Kraftstoff aus dem Hochdruckbereich zur Hochdruckpumpe zu verhindern.

Während des Verdrängerhubs kehrt sich die Strömungsrichtung in der Leitung 22 um, so dass der Schließkörper 3 wieder nach links bewegt wird, und der Dichtteller 17 am Plansitz 24 anliegt. Somit ist das Einlassventil 1 geschlossen, so dass Kraftstoff über die Leitung 23 zum Hochdruckbereich des Speichereinspritzsystems gefördert werden kann. Während der Bewegungen des Schließkörpers 3 in Axialrichtung X-X wird der Schließkörper 3 jeweils am ersten Führungsbereich 9 und am zweiten Führungsbereich 10 des Führungselements 5 geführt. Da die beiden Führungsbereiche die jeweiligen Enden des Schließkörpers 3 führen, kann ein Verkippen des Schließkörpers bzw. ein leichtes Schrägstellen sicher verhindert werden. Dadurch wird gewährleistet, dass während der Bewegung des Schließkörpers 3 keine unerwünschte Kantenbelastung beim Aufsetzen entweder auf dem Plansitz 24 oder dem Anschlag 11 auftritt. Somit kann auch sicher ein Abrieb von Material am Ventilsitz bzw. am Führungselement 5 verhindert werden, so dass die Gefahr von Beschädigungen der Pumpe bzw. anderer nachgeordneter Bauteile durch Abrieb deutlich vermindert ist. Trotz der doppelten Führung des Schließkörpers 3 weist der Schließkörper 3 bzw. das Ventil 1 eine relativ kleine axiale Baulänge auf, wobei über die gesamte Lebensdauer des Ventils eine sichere Führung ohne Beschädigungen ermöglicht werden kann.

Da weiterhin das Führungselement 5 aus Kunststoff hergestellt ist, kann auf kostenintensive Fertigungsverfahren wie z.B. eine spanende Bearbeitung bzw. eine Herstellung mittels Stanzens und Tiefziehens des Führungselements verzichtet werden. Es sei jedoch angemerkt, dass das Führungselement 5 selbstverständlich auch durch die oben erwähnten Herstellungsverfahren hergestellt werden kann.

Allerdings hat eine Herstellung aus Kunststoff noch den weiteren Vorteil, dass die Ärmchen 8 des Führungselements 5 relativ elastisch sind, so dass hohe montagebedingte Bauteilspannungen im Führungselement 5 nicht entstehen. Weiterhin kann die Montage in die Nut 12 des Ventilsitzes dabei einfach ausgeführt werden.

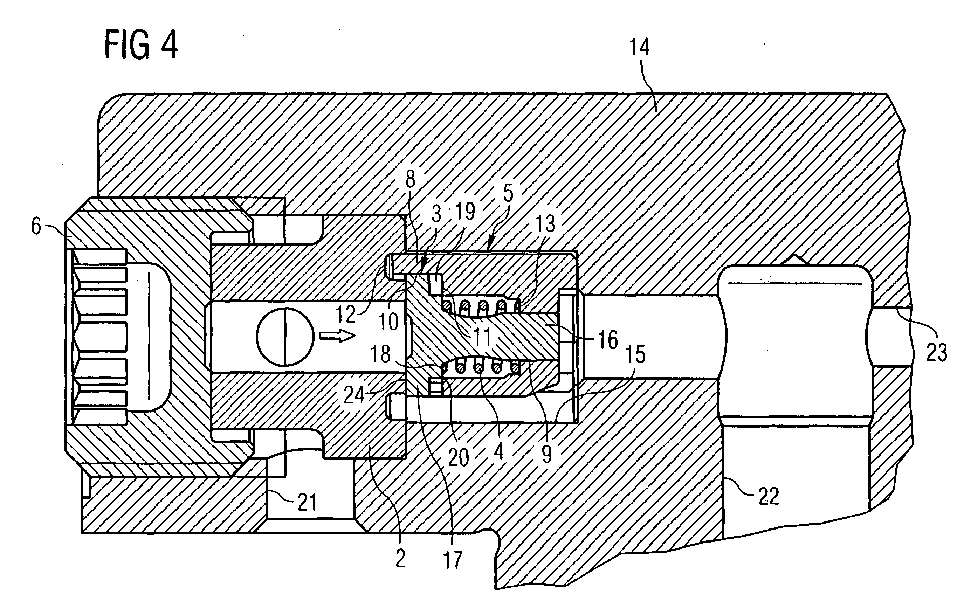

Nachfolgend wird unter Bezugnahme auf Figur 4 ein zweites Ausführungsbeispiel gemäß der vorliegenden Erfindung beschrieben. Gleiche bzw. funktional gleiche Teile sind dabei mit den gleichen Bezugszeichen wie im ersten Ausführungsbeispiel bezeichnet.

Im Unterschied zum ersten Ausführungsbeispiel ist bei dem zweiten Ausführungsbeispiel zusätzlich noch eine hydraulische Dämpfung beim Öffnen des Ventils integriert. Hierzu ist an der zum zylindrischen Bereich 16 gerichteten Seite des Dichttellers 17 ein zusätzlicher Absatz 18 vorgesehen. Dadurch ergibt sich, wie in Figur 4 dargestellt, im montierten Zustand ein mit Kraftstoff gefüllter Raum 19, welcher die hydraulische Dämpfung beim Öffnen übernimmt. Wie in Figur 4 dargestellt, ist zwischen dem Raum 19 und dem Bereich um den zylindrischen Schaft 16 ein Spalt 20 vorgesehen, über welchen der sich im Raum 19 befindliche Kraftstoff beim Öffnen des Ventils abströmen kann. Dadurch wird ein besonders sanftes Öffnen des Ventils erreicht, so dass die Lebensdauer des Ventils noch weiter verbessert werden kann. Gleichzeitig dient der zusätzliche Absatz 18 auch zur Abstützung des Federelements 4 (vgl. Figur 4). Somit weist das Ventil gemäß dem zweiten Ausführungsbeispiel nur durch Ausbildung dieses einfachen ringförmigen Absatzes 18 auch noch eine hydraulische Dämpfung während der Öffnung des Ventils auf. Damit kann eine Aufschlagenergie des Schließkörpers 3 auf den Anschlag 11 verringert bzw. vollständig verhindert werden. Dabei kann die Führungsbuchse 5 ebenfalls weiterhin mittels Spritzgießen aus Kunststoff hergestellt sein.

Zusammenfassend betrifft die vorliegende Erfindung ein Einlass- oder Auslassventil (Rückschlagventil) für eine Pumpe, umfassend einen mittels eines Federelements 4 vorgespannten Schließkörper 3. Der Schließkörper 3 kann einen Durchlass an einem Ventilsitz 2 freigeben bzw. verschließen. Weiterhin umfasst das Ventil ein Führungselement 5 zum Führen des Schließkörpers 3. Der Schließkörper 3 ist im Führungselement 5 dabei an seinen beiden Enden 9,10 geführt.

Die vorliegende Erfindung ist nicht auf die dargestellten Ausführungsbeispiele beschränkt. Es können verschiedene Abweichungen und Änderungen ausgeführt werden, ohne den Erfindungsumfang gemäß der anhängenden Patentansprüche zu verlassen.

## Patentansprüche

1. Einlass- oder Auslassventil für eine Pumpe umfassend einen mittels eines Federelements (4) vorgespannten Schließkörper (3), welcher einen Durchlass an einem Ventilsitz (2) freigeben bzw. verschließen kann, und ein einstückiges Führungselement (5), wobei der Schließkörper (3) im Führungselement (5) an wenigstens einem ersten Führungsbereich (9) an einem oberen Endbereich und einem zweiten Führungsbereich (10) geführt ist, wobei der Schließkörper (3) in einem unteren Endbereich in Bewegungsrichtung des Schließkörpers geführt ist und das Ventil derart ausgebildet und angeordnet ist, dass es in axialer Richtung durchströmt wird.

2. Ventil nach Anspruch 1, **dadurch gekennzeichnet, dass** das Führungselement (5) aus Kunststoff hergestellt ist.

3. Ventil nach einem der vorhergehenden Ansprüche, **dadurch gekennzeichnet, dass** das Führungselement (5) mittels eines Presssitzes mit dem Ventilsitz (2) verbunden ist.

4. Ventil nach Anspruch 3, **dadurch gekennzeichnet, dass** das Führungselement (5) in einer im Ventilsitz (2) gebildeten Aussparung (11) befestigt ist.

5. Ventil nach Anspruch 4, **dadurch gekennzeichnet, dass** das Führungselement (5) in der Aussparung (11) des Ventilsitzes (2) mittels Reibschluss befestigt ist.

6. Ventil nach einem der vorhergehenden Ansprüche, **dadurch gekennzeichnet, dass** das Führungselement (5) einen zylindrischen Bereich (7) mit wenigstens zwei daran integral gebildeten Ärmchen (8) aufweist.

7. Ventil nach einem der vorhergehenden Ansprüche, **dadurch gekennzeichnet, dass** das Führungselement (5) eine Anschlagsfläche (11) für eine Hubbegrenzung des Schließkörpers (3) aufweist.

8. Ventil nach einem der vorhergehenden Ansprüche, **dadurch gekennzeichnet, dass** das Führungselement (5) einen Federsitz (13) aufweist, wobei der Federsitz (13) gleichzeitig auch eine Zentrierung des Federelements (4) bereitstellt.

9. Ventil nach einem der Ansprüche 6 bis 8, **dadurch gekennzeichnet, dass** das Führungselement (5) drei Ärmchen (8) aufweist, so dass zwischen zwei benachbarten Ärmchen jeweils ein Überströmkanal in Axialrichtung (X-X) gebildet ist.

10. Ventil nach einem der vorhergehenden Ansprüche, **dadurch gekennzeichnet, dass** wenigstens ein Führungsbereich (9, 10) zylindrisch ausgebildet ist.

11. Ventil nach einem der vorhergehenden Ansprüche, **dadurch gekennzeichnet, dass** wenigstens ein Führungsbereich konvex ausgebildet ist.

12. Ventil nach einem der vorhergehenden Ansprüche, **dadurch gekennzeichnet, dass** der Ventilsitz (2) als Plansitz ausgebildet ist.

13. Ventil nach einem der vorhergehenden Ansprüche, **dadurch gekennzeichnet, dass** der Schließkörper (3) einen zylindrischen Schaft aufweist, welcher von einem der Führungsbereiche (9, 10) geführt wird.

14. Ventil nach einem der vorhergehenden Ansprüche, **dadurch gekennzeichnet, dass** der Schließkörper (3) einen planen Dichtteller (17) aufweist, welcher seitlich von einem der Führungsbereiche (9, 10) geführt wird.

15. Ventil nach einem der Ansprüche 1 bis 13, **dadurch gekennzeichnet, dass** der Dichtteller sich verjüngend, insbesondere konisch, ausgebildet ist.

16. Ventil nach einem der vorhergehenden Ansprüche, **dadurch gekennzeichnet, dass** am Schließkörper (3) ein zusätzlicher ringförmiger Absatz (18) derart ausgebildet ist, dass zwischen dem Absatz (18) und der Anschlagfläche (11) des Führungselements (5) ein mit Fluid gefüllter Raum (19) für eine hydraulische Dämpfung einer Bewegung des Schließkörpers (3) ausgebildet ist.

17. Ventil nach einem der vorhergehenden Ansprüche, **dadurch gekennzeichnet, dass** das Ventil als Einlassventil einer Kolbenpumpe, insbesondere einer Kraftstoffkolbenpumpe, verwendet wird.

## Claims

1. Inlet or outlet valve for a pump, comprising a closing body (3), pre-tensioned by a spring element (4), that can open or close a passage on a valve seat (2), and a single-piece guide element (5), the closing body (3) being guided inside the guide element (5) at least on a first guide area (9) at an upper end region and on a second guide area (10), wherein the closing body (3) is guided in a lower end region in the direction of movement of the closing body and the valve is embodied and arranged in such a way that it has a transfer flow in the axial direction.

2. Valve according to claim 1, **characterised in that** the guide element (5) is made of plastic.

3. Valve according to one of the preceding claims, **characterised in that** the guide element (5) is connected to the valve seat (2) by means of a press fit.

4. Valve according to claim 3, **characterised in that** the guide element (5) is mounted in a recess (12) formed in the valve seat (2).

5. Valve according to claim 4, **characterised in that** the guide element (5) is mounted in the recess (12) of the valve seat (2) by means of a friction fit.

6. Valve according to one of the preceding claims, **characterised in that** the guide element (5) has a cylindrical region (7) having at least two arms (8) integrally formed thereon.

7. Valve according to one of the preceding claims, **characterised in that** the guide element (5) has an end-stop surface (11) for a limit of travel of the closing body (3).

8. Valve according to one of the preceding claims, **characterised in that** the guide element (5) has a spring seat (13), the spring seat (13) also providing at the same time a means of centring the spring element (4).

9. Valve according to one of the claims 6 to 8, **characterised in that** the guide element (5) has three arms (8), so that a transfer port in the axial direction (X-X) is formed between each pair of adjacent arms.

10. Valve according to one of the preceding claims, **characterised in that** at least one guide area (9, 10) is embodied in a cylindrical shape.

11. Valve according to one of the preceding claims, **characterised in that** at least one guide area is embodied in a convex shape.

12. Valve according to one of the preceding claims, **characterised in that** the valve seat (2) is embodied as a flat seat.

13. Valve according to one of the preceding claims, **characterised in that** the closing body (3) has a cylindrical shaft that is guided by one of the guide areas (9, 10).

14. Valve according to one of the preceding claims, **characterised in that** the closing body (3) has a flat sealing head (17) that is guided along its sides by one of the guide areas (9, 10).

15. Valve according to one of the claims 1 to 13, **characterised in that** the sealing head is embodied in a tapered, in particular conical, shape.

16. Valve according to one of the preceding claims, **characterised in that** an additional annular step (18) is formed on the closing body (3) in such a way that a fluid-filled chamber (19) is formed between the step (18) and the end-stop surface (11) of the guide element (5) for hydraulic damping of a movement of the closing body (3).

17. Valve according to one of the preceding claims, **characterised in that** the valve is used as an inlet valve in a piston pump, in particular in a piston fuel pump.

## Revendications

1. Soupape d'admission ou d'échappement pour une pompe, comportant un corps de fermeture (3) mis en tension au moyen d'un élément de ressort (4) et qui peut respectivement ouvrir ou fermer un orifice de passage sur un siège de soupape (2), et un élément de guidage (5) en une seule pièce, le corps de fermeture (3) étant guidé dans l'élément de guidage (5) contre au moins une première zone de guidage (9) sur une zone d'extrémité supérieure et contre une deuxième zone de guidage (10), le corps de fermeture (3) étant guidé dans une zone d'extrémité inférieure dans le sens de déplacement du corps de fermeture et la soupape étant réalisée et disposée de telle façon qu'elle soit traversée par l'écoulement suivant la direction axiale.

2. Soupape suivant la revendication 1, **caractérisée en ce que** l'élément de guidage (5) est fabriqué en matière plastique.

3. Soupape suivant l'une des revendications précédentes, **caractérisée en ce que** l'élément de guidage (5) est relié au siège de soupape (2) au moyen d'un ajustement serré.

4. Soupape suivant la revendication 3, **caractérisée en ce que** l'élément de guidage (5) est fixé dans un évidement (11) formé dans le siège de soupape (2).

5. Soupape suivant la revendications 4, **caractérisée en ce que** l'élément de guidage (5) est fixé dans l'évidement (11) du siège de soupape (2) par ajustement par friction.

6. Soupape suivant l'une des revendications précédentes, **caractérisée en ce que** l'élément de guidage (5) présente une zone cylindrique (7) comportant au moins deux doigts (8) formant un ensemble intégré.

7. Soupape suivant l'une des revendications précédentes, **caractérisée en ce que** l'élément de guidage (5) présente une surface de butée (11) pour limiter la levée du corps de fermeture (3).

8. Soupape suivant l'une des revendications précédentes, **caractérisée en ce que** l'élément de guidage (5) présente un siège de ressort (13), ce siège de ressort (13) effectuant en même temps un centrage de l'élément de ressort (4).

9. Soupape suivant l'une des revendications 6 à 8, **caractérisée en ce que** l'élément de guidage (5) présente trois doigts (8) de telle façon qu'entre deux doigts voisins soit chaque fois formé un canal de débordement dans la direction axiale (X-X).

10. Soupape suivant l'une des revendications précédentes, **caractérisée en ce qu'**au moins une zone de guidage (9, 10) est réalisée cylindrique.

11. Soupape suivant l'une des revendications précédentes, **caractérisée en ce qu'**au moins une zone de guidage est réalisée convexe.

12. Soupape suivant l'une des revendications précédentes, **caractérisée en ce que** le siège de soupape (2) est réalisé sous la forme d'un siège plan.

13. Soupape suivant l'une des revendications précédentes, **caractérisée en ce que** le corps de fermeture (3) présente une tige cylindrique qui est guidée par l'une des zones de guidage (9, 10).

14. Soupape suivant l'une des revendications précédentes, **caractérisée en ce que** le corps de fermeture (3) présente un disque d'étanchéité (17) plan, qui est guidé latéralement par l'une des zones de guidage (9, 10).

15. Soupape suivant l'une des revendications 1 à 13, **caractérisée en ce que** le disque d'étanchéité est réalisé en se rétrécissant, en particulier en forme de cône.

16. Soupape suivant l'une des revendications précédentes, **caractérisée en ce que**, sur le corps de fermeture (3), est réalisé un épaulement supplémentaire (18) de forme annulaire, de telle façon qu'entre l'épaulement (18) et la surface de butée (11) de l'élément de guidage (5) est réalisé un espace (19) rempli de fluide pour amortir hydrauliquement un déplacement du corps de fermeture (3).

17. Soupape suivant l'une des revendications précédentes, **caractérisée en ce que** la soupape est utilisée comme soupape d'admission d'une pompe à piston, en particulier d'une pompe de carburant à piston.
